# EUROPEAN PATENT APPLICATION

(11) **EP 4 744 827 A2**
(43) Date of publication of application: **20.05.2026**
(21) Application number: 26162996.8
(22) Date of filing: 30.05.2024
(51) Int. Cl.: B25B 23/14, B25B 23/145, B25B 23/147

(54) **CONTROLLING A MOTOR OF A PULSE TOOL**

(30) Priority: 27.06.2023 SE 2330295
(62) Divisional of application: 24730331.6
(71) Applicant: Atlas Copco Industrial Technique AB, 105 23 Stockholm (SE)
(72) Inventor: Friberg, Christian, 13148 Nacka (SE)
(74) Representative: Atlas Copco Industrial Technique AB

(57) **Abstract**

A method of controlling a motor of a pulse tool is provided. The pulse tool is arranged to provide torque in pulses during a tightening operation to tighten a threaded joint. The method comprises: determining a parameter value (d) indicative of a torque and/or angle increase achieved by a just performed pulse (n); determining a motor power control parameter value (M) for the next pulse (n+1) based on said determined parameter value indicative of the torque and/or angle increase; controlling the motor according to the determined motor power control parameter value to create the next pulse; and repeating these steps until a target torque and/or angle is reached. Thereby, a control method is provided that will adjust the power (energy) of the motor during the tightening dependent on the characteristics of the joint. This enables a trade-off between speed and accuracy of the tightening that is tailored to the joint being tightened.

## Description

### Field of the invention

The present invention generally relates to the field of controlling motors of pulse tools. In particular, the present invention relates to pulse strategies for such pulse tools.

### Background of the invention

In industrial assembly, the requirements on ergonomics for operators as well as precision in installed torque in a joint are of high importance. Therefore, so called pulse tools are often used. Pulse tools deliver the tightening torque in pulses, wherein the output torque is zero between each torque pulse. This may be achieved either by means of a hydraulic pulse unit that intermittently couples the motor to the output shaft, or by the motor of the tool itself being driven in a pulsed manner. Such pulse tools are known for achieving high precision in installed torque as well as low reaction forces for the operators due to the pulsing technique.

Another desire in industrial assembly is rapid tightening operations since this may save time (and therefore costs) in the assembly procedure. This desire may typically contravene the requirement on high accuracy in installed torque. To speed up a tightening operation, high motor power must be used. However, high motor power may result in lower precision in installed torque. In conventional pulse tools, the same motor power (and thereby the same energy) is used for the pulses throughout the tightening operations.

WO 2021151674 A1 discloses a pulse tool allowing a user to set different power levels to be used during different stages of the tightening. Thus, the user can adjust the power level to be high in the beginning of a tightening up to a certain torque threshold, and then low as the torque exceeds that torque threshold, so that the tightening is performed with a lower power close to the target torque. Thus, the user is able to take the characteristics of the joint into consideration when setting the power for the pulses up to a certain torque threshold. It is possible to adapt the power so that the joint is tightened as fast as possible up to a certain torque threshold. It is also possible to achieve a more accurate tightening since the power can be set to a lower value close to the target torque.

A shortcoming with this solution is that it requires manual input and knowledge of the characteristics of the joints that the strategy is to be applied to. Further, the pre-set power levels may not be optimal for all the joints to be tightened, in terms of speed and accuracy.

### Summary of the invention

It would be advantageous to achieve a method and a control device overcoming, or at least alleviating, the above mentioned drawbacks. In particular, it would be desirable to provide a method and a control device that enable a better tailored trade-off between speed and accuracy of tightenings of different joints.

To better address one or more of these concerns, a method and a control device having the features defined in the independent claims are provided. Preferable embodiments are defined in the dependent claims.

Hence, according to a first aspect, a method of controlling a motor of a pulse tool is provided. The pulse tool is arranged to provide torque in pulses during a tightening operation to tighten a threaded joint. The method comprises:
- determining a parameter value indicative of a torque increase and/or angle increase achieved by a just performed pulse;
- determining a motor power control parameter value for the next pulse based on said determined parameter value indicative of the torque increase and/or angle increase;
- controlling the motor according to the determined motor power control parameter value to create the next pulse; and
repeating these steps until a target torque and/or target angle is reached (and the tightening operation is ended).

With the present aspect, the motor is controlled to output a power in the next (i.e. immediately succeeding) pulse dependent on the torque and/or angle increase achieved in the just performed (i.e. immediately preceding) pulse. Thereby, a control method is provided that will adjust the power (energy) of the motor during the tightening dependent on the characteristics of the joint. This enables a trade-off between speed and accuracy of the tightening that is tailored to the joint being tightened. For example, a soft joint will imply a lower increase in torque and higher increase in angle per pulse as compared to a hard joint. Due to the relatively small torque increase steps, softer joints may typically take longer time to tighten. The control method may detect this and determine a motor power control parameter value so as to provide an increase of the motor power in the next pulse. In this way, the tightening will proceed faster as compared to if no adjustment of the motor power was done. On the other hand, if the torque increase is higher (and the angle increase is lower), as a consequence of a harder joint, the control method may determine a motor power control parameter value so as to decrease the motor power in the next pulse, whereby the torque step per pulse will become smaller, which in turn will result in a better precision in the finally installed torque.

In conclusion, the present invention enables an automated procedure that provides a trade-off between speed and accuracy of tightening operations better adapted to different joints.

It will be appreciated that either one, or both of, a torque increase and an angle increase may be determined for the previous pulse. They are both parameters that, in opposite ways, reflects the stiffness of the joint. A pulse created with a given motor power will result in a larger torque increase and a smaller angle increase for a hard joint as compared to a soft joint.

According to an embodiment, the motor power control parameter value for the next pulse may be determined to be lower with a larger torque increase and/or smaller angle increase as indicated by said determined parameter value, and higher with a smaller torque increase and/or larger angle increase as indicated by said determined parameter value.

A smaller torque increase, as well as a larger angle increase, may indicate that the joint being tightened is relatively soft. This means that there is room for increasing the motor power output while still achieving a good accuracy in the finally installed torque. Analogously, a larger torque increase, as well as a smaller angle increase, may indicate that the joint being tightened is relatively hard. This means that it is better to decrease the motor power output to be able to achieve a good accuracy in the finally installed torque even though it comes at a cost of a slightly less rapid tightening as compared to if no adaptation of the motor power output had been made.

The present embodiment may be realised in different ways. For example, one or more thresholds for the torque and/or angle increase may be pre-set, such that if the torque increase in the just performed pulse is larger than a predetermined first threshold value, the motor power control parameter value is determined to be lower (e.g. by a predetermined amount) for the next pulse than that of the just performed pulse. Further, if the torque increase in the just performed pulse is smaller than a second predetermined threshold value (being lower than the first predetermined threshold value), the motor power control parameter value is determined to be higher (e.g. by a predetermined amount) for the next pulse than that of the just performed pulse. Similar thresholds may be set for the angle increase but with opposite logic.

According to another example, values of the torque/angle increase in the forgoing pulse may be correlated with specific motor power control parameter values for the next pulse in a look-up table or with a predetermined function.

According to an embodiment, the method may further comprise, before the tightening operation starts, receiving input (e.g. from a user interface) indicative of a desired trade-off between speed and accuracy of the tightening operation, wherein determining the motor power control parameter value for the next pulse is further based on said received input indicative of the desired trade-off between speed and accuracy.

For example, if the input indicates a desire of higher speed at the cost of lower accuracy, the motor power control parameter value for the next pulse may be determined to be higher as compared to if the input indicates a desire of higher accuracy at the cost of lower speed.

For example, a user may be able to select between two or more modes of operation for the pulse tool, such as one accurate mode, one normal mode and one speedy mode.

The present embodiment is advantageous in that it allows a user to tailor the trade-off between speed and accuracy to a specific application.

According to an embodiment, determining the parameter value indicative of the torque and/or angle increase may comprise determining a difference between a received input indicative of a torque and/or angle achieved in the just performed pulse and a received input indicative of a torque and/or angle achieved in the pulse just before the just performed pulse.

For example, the parameter value indicative of the torque and/or angle increase may be based on input received from a torque transducer and/or from an angle encoder and/or any other means for measuring or estimating the torque and/or angle in a performed pulse.

According to an embodiment, the method may further comprise receiving input indicative of a (total) torque and/or total angle achieved in the just performed pulse (i.e. the total torque and/or angle achieved by the tightening so far), wherein determining the motor power control parameter value for the next pulse may be further based on the received input indicative of a (total) torque and/or total angle achieved in the just performed pulse. In this way, the motor power control parameter value for the next pulse may also be based on when in the tightening operation the next pulse is, that is, how close to the target torque/angle the next pulse is. In other words, determining the motor power control parameter value for the next pulse may be further based on how close the total torque (of the just performed pulse), as indicated by the received input, is to the target torque and/or how close the total angle (of the just performed pulse), as indicated by the received input, is to the target angle. For example, the method may comprise a step of comparing the total torque and/or total angle (as indicated by the received input) with the target torque and/or target angle, respectively. In the beginning of the tightening operation, high pulse energy (motor power) is beneficial as it provides a speedy first part of the tightening, while low pulse energy (motor power) is better towards the end of the tightening operation as it will improve the accuracy of the finally installed torque. Thus, the motor power control parameter value for the next pulse may be determined such that a lower motor power is determined, the closer the total torque and/or total angle is to the target torque and/or target angle (at least during a major part of the torque build-up phase of the tightening, e.g. with the exception of the very first few pulses of that phase).

This embodiment may be realised e.g. by adapting a target torque increase and/or target angle increase for each pulse (that e.g. may be expressed in terms of one or more thresholds for the torque and/or angle increase that may be pre-set as described above) based on the closeness to the target torque/angle of the tightening. In this way, the closeness to the end target torque and/or angle of the tightening may determine/dictate the one or more thresholds (or targets) that is used for comparison with the just achieved torque/angle increase. Hence, both the closeness to the end target torque/angle of the tightening as well as the characteristics of the joint are optimized for so as to achieve an even speedier tightening yet with high precision in installed torque.

For example, the target torque increase and/or target angle increase may be lower the closer the just performed pulse is to the end of the tightening, thereby allowing generally larger torque steps in the beginning of the tightening (which saves time) and generally lower torque steps at the end of the tightening (which promotes high precision in installed torque). The target torque increase and/or target angle increase may e.g. be continuously lowered as the tightening proceeds or be lowered in steps.

In the present specification, the term "motor power control parameter" means a parameter that, when adjusted will make the output power (energy) of the motor to be adjusted accordingly. It may itself be set as a control target for a motor controller, or it may be converted to a control target for the motor controller. The motor power control parameter may e.g. be any one of: motor power, motor current, energy output from the motor, motor torque and motor speed (that, is the peak motor speed in the next pulse cycle). For example, if the motor power control parameter value is determined in terms of motor power, the determined motor power value may itself be used as input to the motor controller, or it may be converted to e.g. a motor current value, which in turn may be used as input to the motor controller. In this context, a motor controller means a device (e.g. being a part of a control device of the pulse tool) that, based on a received control target, regulates the motor to achieve that control target.

According to an embodiment, the pulses may be provided by a hydraulic pulse unit of the pulse tool, wherein the hydraulic pulse unit intermittently couples the motor via a hydraulic coupling mechanism to an output shaft of the pulse tool.

In this kind of pulse tool, the motor is driven to output a continuous (in contrast to intermittent) torque/power/energy during the tightening, and it is the hydraulic pulse unit that creates the pulses. The continuous torque/power/energy of the motor may be adjusted according to the repeatedly determined motor power control parameter value during the tightening.

Alternatively, the motor may itself be driven in a pulsed (intermittent) manner to provide the pulses on the output shaft of the pulse tool, wherein the output power/torque/energy of the motor is zero between the pulses. Hence, the motor delivers no torque/power/energy between the pulses. The intermittent torque/power/energy of the motor may be adjusted according to the repeatedly determined motor power control parameter value during the tightening.

According to a second aspect, a control device for controlling a motor of a pulse tool is provided. The pulse tool is arranged to provide torque in pulses during a tightening operation to tighten a threaded joint. The control device is configured to perform the method according to the first aspect.

According to an embodiment, a system is provided that comprises a pulse tool arranged to provide torque in pulses during a tightening operation to tighten a threaded joint, the pulse tool comprising a motor; and a control device according to the second aspect for controlling the motor of the pulse tool.

According to an embodiment, a computer program is provided comprising instructions which, when the program is executed by a computer (such as the control device), cause the computer to carry out the method according to the first aspect.

According to an embodiment, a computer-readable storage medium is provided comprising instructions which, when executed by a computer (such as the control device), cause the computer to carry out the method according to the first aspect.

It is noted that embodiments of the invention relates to all possible combinations of features recited in the claims. Further, it will be appreciated that the various embodiments described for the method are all combinable with the control device as defined in accordance with the second aspect of the present invention.

### Brief description of the drawings

These and other aspects will now be described in more detail in the following illustrative and non-limiting detailed description of embodiments, with reference to the appended drawings.
Figure 1 shows a pulse tool comprising a hydraulic pulse unit according to an embodiment.
Figure 2 shows a pulse tool with an intermittently driven electric motor according to an embodiment.
Figure 3 shows graphs of how different parameters varies during a tightening according to an embodiment.
Figure 4 shows a method according to an embodiment.
Figure 5 shows a graph illustrating how the motor power output varies during five tightenings of five different joints according to an embodiment.

All the figures are schematic, not necessarily to scale, and generally only show parts which are necessary in order to elucidate the embodiments, wherein other parts may be omitted. Like reference numerals refer to like elements throughout the description.

### Detailed description of embodiments

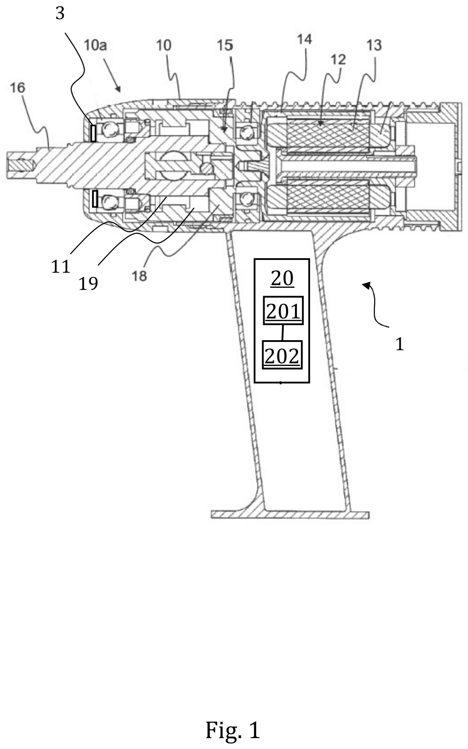

A pulse tool 1 according to an embodiment will be described with reference to Figure 1. The pulse tool 1 may be arranged to tighten threaded fastener during industrial assembly. The pulse tool 1 comprises a motor 12, which preferably may be an electric motor 12. The motor 12 may comprise a rotor 14 and a stator 13. The tool 1 may further comprise an output shaft 16. The output shaft 16 may be arranged at a front end 10a of a housing 10 of the tool 1. The tool 1 may further comprise a hydraulic pulse unit 15 arranged to intermittently couple the motor 12 via a hydraulic coupling mechanism to the output shaft 16. For example, the pulse unit 15 may comprise an inertia drive member 18 coupled to the rotor 14 in a rotatable fixed manner. Hence, the inertia drive member 18 will rotate together with the motor 12. The inertia drive member 18 may comprise a cylindrical fluid chamber 19, into which an impulse receiving portion 11 of the output shaft 16 extends. An arrangement including cam profiles and pistons is arranged to intermittently transfer rotational energy from the inertia drive member 18 to the impulse receiving portion 11. Such an arrangement is known as such to the skilled person and will not be described further herein. An example of a hydraulic pulse unit is described in WO 9114541 A1.

In this type of pulse tool 1, the motor 12 will deliver a continuous, relatively low, torque, such as for example a torque of around 1 Nm. The hydraulic pulse unit 15 will then convert this continuous torque from the motor 12 to intermittent torque pulses on the output shaft 16, wherein each torque pulse e.g. may be around 15-55 Nm. Such a pulse tool 1 may in the following be referred to as a hydraulic pulse tool.

The tool 1 may further comprise a control device 20. The control device 20 may comprise processing circuitry 201 and a memory 202. The control device 20 may be configured to control the motor 12.

Alternatively, the control device 20 may be arranged outside, and in communication with, the tool 1.

The tool 1 may further comprise a sensor 3 arranged to sense a parameter indicative of a torque and/or angle achieved by a torque pulse delivered by the output shaft 16. For example, the sensor may comprise an angle encoder 3 arranged to measure an angular position and velocity of the output shaft 16 (or of a component in fixed rotational relation to the output shaft 16). The angular encoder 3 may sense an angle increase achieved by a just performed pulse. It may also sense a retardation of the angular velocity of the output shaft 16 resulting from the transfer of torque from the tool to the fastener. This retardation of the angular velocity is indicative of the torque in the performed pulse and may thus be used for estimating/calculating the torque achieved by the performed pulse.

As an alternative, or as a complement, the sensor may comprise a strain gauge (not shown) arranged to sense the strain in the output shaft 16 (or of a component in fixed rotational relation to the output shaft 16), which is indicative of the torque in the performed pulse. For example, the sensor may comprise a torque transducer.

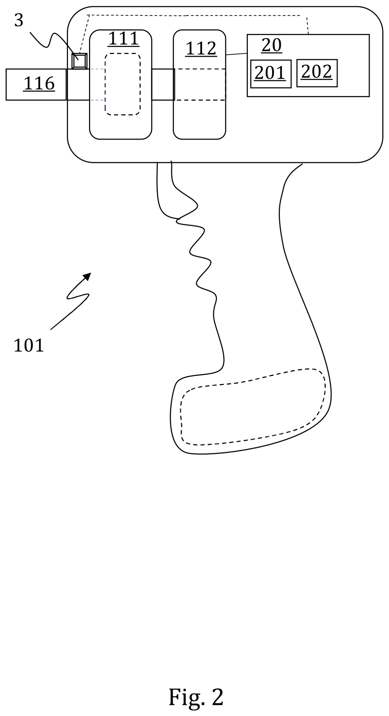

Figure 2 depicts another exemplary embodiment of a pulse tool 101 of the present disclosure. In this embodiment, the pulses are created by driving an electric motor 112 in a pulsed (intermittent) manner. The pulses may be created as the electric motor 112 accelerates within a play in a gear arrangement 111 between the electric motor 112 and the output shaft 116. The energy from the motor 112 is then transferred to the output shaft 116 and a pulse is created on the output shaft 116. The electric motor 112 may comprise a rotor and a stator.

Such a pulse tool 101 may in the following be referred to as a direct driven pulse tool.

For example, the gear arrangement 111 may comprise a play unit (not shown). Alternatively, the play unit may be arranged separately from the gear arrangement 111. The purpose of the play unit is to add play to the play that exists in the gear arrangement 11. An advantage with a separate play unit is that the amount of play can be chosen. In case a larger play is chosen in the play unit, there will be more time to control the speed of the electric motor 112 before the play in the play unit is closed and the electric motor 112 couples to the output shaft 116 to provide a torque pulse on the output shaft 116.

The tool 101 may further comprise similar components (such as a sensor 3, and a control device 20) as the tool 1 described with reference to Figure 1.

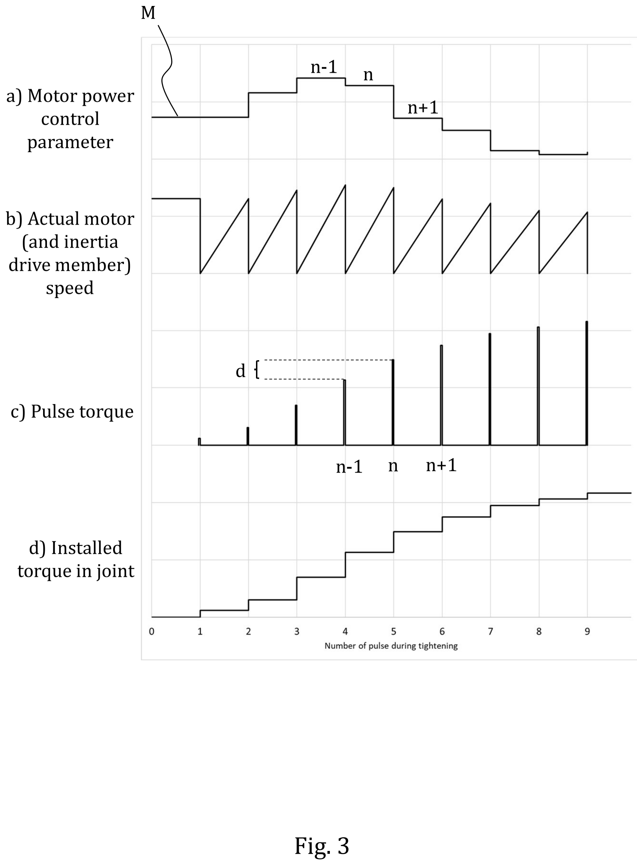

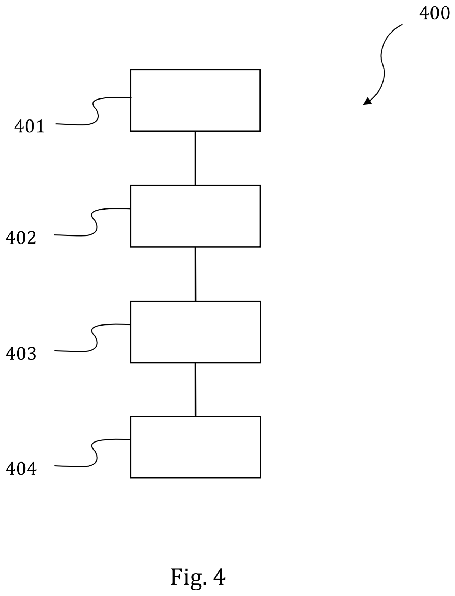

The principles of an embodiment of the invention will now be described with reference to Figures 3 and 4. Figure 3 illustrates how a determined motor power control parameter value M (a), actual motor (and inertia drive member) speed (b), pulse torque (c) and installed torque in the joint (d) will vary throughout a torque build-up phase (following a rundown phase) of a tightening operation performed by a pulse tool, such as by any one of the pulse tools described above. Figure 4 illustrates a method according to an embodiment.

The control device 20 may optionally be configured to, before the tightening operation starts, receive 401 input (e.g. via a user interface) indicative of a desired trade-off between speed and accuracy of the tightening operation. For example, the user may select between an accurate, normal and speedy mode.

First, the rundown of the tightening operation is completed. A start motor power control parameter value that the control device 20 may control the motor according to may be pre-set for the first one or few pulses of the torque build-up phase. Optionally, this start motor power control parameter value may be the same as the rundown motor power control parameter value.

Further, the control device 20 is configured to determine 402 a parameter value indicative of a torque and/or angle increase achieved by a just performed pulse n. This may e.g. be made by calculating the difference d between the torque achieved by the just performed pulse n with the torque achieved by the pulse n-1 performed just before the just performed pulse n (see graph c) in Figure 3). An angle increase may e.g. be derived directly from the angle encoder.

The control device 20 may be further configured to receive input indicative of a total torque and/or total angle achieved in the just performed pulse (i.e. the total torque and/or angle achieved by the tightening so far). The control device 20 may be configured to compare this received input to the (end) target torque/angle of the tightening.

The control device 20 is further configured to determine 403 a motor power control parameter value M (see graph a) in Figure 3) for the next pulse n+1 based on the determined parameter value indicative of the torque and/or angle increase. This may e.g. be made by comparing the torque increase and/or angle increase, as indicated by the parameter, with a target torque increase and/or target angle increase (e.g. as indicated by one or more thresholds), respectively. For example, if the torque increase, as indicated by the received parameter, is lower than the target torque increase for that pulse n, a higher motor power control parameter value M may be determined, and vice versa. This may e.g. be the case if the joint is relatively soft.

The control device 20 may be further configured to control 404 the motor according to the determined motor power control parameter value M to create the next pulse n+1. Hence, the motor power control parameter value M may constitute a control target when controlling the motor. The motor power control parameter value M may indicate a target energy of the next pulse n+1. The motor power control parameter may e.g. be expressed in terms of a motor power/energy/torque to be output by the motor in the next pulse cycle, or in terms of motor current to be input to the motor in the next pulse cycle, or in terms of motor speed, and in particular, a peak motor speed to be output by the motor in the next pulse cycle (see the peaks in graph b) in Figure 3). The speed of the motor will build up after a performed pulse (both for hydraulic and direct driven pulse tools) up to a peak speed. Then, the motor speed will rapidly drop to (at least essentially) zero as the torque is transferred to the joint (via the hydraulic coupling in case of a hydraulic pulse tool). The value of the peak speed will determine the energy of the pulse.

The motor power control parameter value M for the next pulse n+1 may be determined to be lower with a larger torque increase and/or smaller angle increase, and higher with a smaller torque increase and/or larger angle increase. Thus, the algorithm operated by the control device 20 may adapt the motor power to the stiffness of the joint. As illustrated in Figure 3, the determined motor power control parameter value M may e.g. first increase in a few steps and then decrease in the following steps until the end of the tightening operation. The smaller steps towards the end will improve the accuracy of the tightening while the larger steps in the beginning will speed up the tightening.

Optionally, the motor power control parameter value M for the next pulse n+1 may be determined also based on the received input indicative of the desired trade-off between speed and accuracy. If a speedier tightening is desired, the control device 20 may decide on generally higher motor power control parameter values as compared to if a more accurate tightening is desired.

Optionally, the motor power control parameter value M for the next pulse n+1 may be determined further based on the received input indicative of a (total) torque and/or total angle achieved in the just performed pulse. The closer the target torque or target angle the received torque/total angle of the previous pulse is, the lower motor power control parameter value M may be determined for the next pulse n+1. Thus, the algorithm operated by the control device 20 may adapt the motor power also to the how far the tightening has proceeded (i.e. how close the just performed pulse is to the end target). This may e.g. be realized by the above-described target torque increase and/or target angle increase per pulse being set so as to decrease towards the end of the tightening operation (i.e. the closer the total torque and/or total angle of the just performed pulse is to the end target). This may be a linear decrease or according to a predetermined function.

The steps of determining 402 the parameter value indicative of the torque and/or angle increase, determining 403 the motor power control parameter value and controlling 404 the motor accordingly are then repeated until a target torque and/or angle is reached, whereby the tightening operation is ended.

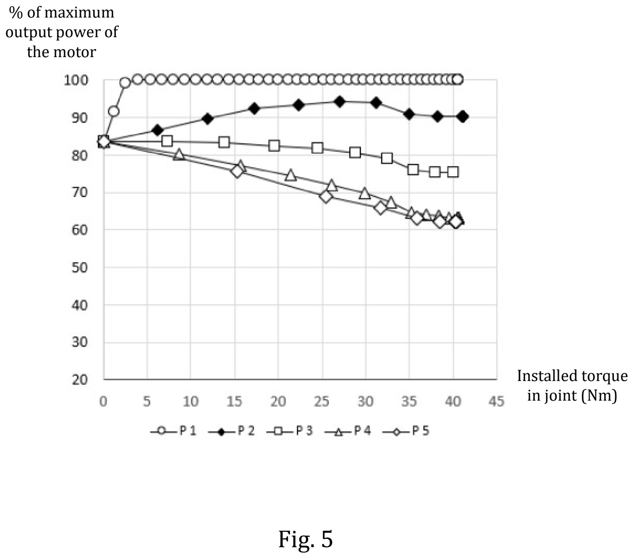

Figure 5 illustrates how the control device 20 adapts the motor power output (y-axis) as five exemplary tightening operations P1-P5 of five different joints proceeds (the torque installed in the joint is represented on the x-axis). Each circle/diamond/square/triangle represents one pulse. All five tightening operations P1-P5 may start at a pre-set motor power control parameter value that in the present example corresponds to around 83% of a maximum power output of the motor. In the tightening operation P1, the control device 20 soon detects that the torque increase is relatively low (such as below a predetermined threshold) and therefore determines to increase the motor power control parameter value. As can be seen, the motor power control parameter value is soon on a maximum level, whereby the motor power output is 100% of the maximum output of the motor, where it will remain until the target torque of 40Nm is reached and the tightening is ended. This may typically happen when tightening a very soft joint. The generally high motor power output during the tightening will make sure the tightening goes faster as compared to if the motor power output had stayed on the initial value of 83% until the end of the tightening.

In the tightening operation P5 on the other hand, the control device 20 soon detects that the torque increase is relatively high (such as above a predetermined threshold) and therefore determines to decrease the motor power control parameter value. As can be seen, the motor power control parameter value will gradually drop (and as a consequence, also the motor power output) until the target torque of 40Nm is reached and the tightening is ended. This may typically happen when tightening a very hard joint. The generally low motor power output during the tightening will make sure the tightening goes slower, whereby a higher accuracy of the final installed torque is provided, as compared to if the motor power output had stayed on the initial value of 83% until the end of the tightening.

The control device 20 may operate analogously in the tightening operations P2-P4.

The person skilled in the art realizes that the present invention by no means is limited to the embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. Method (400) of controlling a motor (12, 112) of a pulse tool (1, 101), the pulse tool being arranged to provide torque in pulses during a tightening operation to tighten a threaded joint,
the method comprising:
- determining (402) a parameter value (d) indicative of a torque increase and/or angle increase achieved by a just performed pulse (n);
- determining (403) a motor power control parameter value (M) for the next pulse (n+1) based on said determined parameter value indicative of the torque increase and/or angle increase;
- controlling (404) the motor according to the determined motor power control parameter value to create the next pulse; and
repeating these steps until a target torque and/or target angle is reached,
the method further comprising:
- receiving input indicative of a total torque and/or total angle achieved in the tightening operation so far by the just performed pulse (n),
wherein determining the motor power control parameter value for the next pulse (n+1) is further based on how close the total torque and/or total angle, as indicated by said received input, is to the target torque and/or target angle, respectively.

2. Method according to claim 1, wherein the motor power control parameter value for the next pulse is determined to be lower with a larger torque increase and/or smaller angle increase as indicated by said determined parameter value, and higher with a smaller torque increase and/or larger angle increase as indicated by said determined parameter value.

3. Method according to claim 1 or 2, further comprising, before the tightening operation starts, receiving (401) input indicative of a desired trade-off between speed and accuracy of the tightening operation, wherein determining the motor power control parameter value for the next pulse is further based on said received input indicative of the desired trade-off between speed and accuracy.

4. Method according to any one of the preceding claims, wherein determining said parameter value indicative of the torque increase and/or angle increase comprises determining a difference (d) between a received input indicative of a torque and/or angle achieved in the just performed pulse and a received input indicative of a torque and/or angle achieved in the pulse (n-1) just before the just performed pulse.

5. Method according to any one of the preceding claims, wherein the motor power control parameter is any one of: motor power, motor current, motor torque, energy output from the motor, and motor speed.

6. Method according to any one of the preceding claims, wherein the pulses are provided by a hydraulic pulse unit (15) of the pulse tool (1), wherein the hydraulic pulse unit intermittently couples the motor (12) via a hydraulic coupling mechanism to an output shaft (16) of the pulse tool.

7. Method according to any one of claims 1 to 5, wherein the motor (112) is driven in a pulsed manner to provide the pulses on an output shaft (116) of the pulse tool (101), wherein the output of the motor is zero between the pulses.

8. Control device (20) for controlling a motor of a pulse tool, the pulse tool being arranged to provide torque in pulses during a tightening operation to tighten a threaded joint, the control device being configured to perform the method according to any one of the preceding claims.

9. System comprising:
a pulse tool arranged to provide torque in pulses during a tightening operation to tighten a threaded joint, the pulse tool comprising a motor; and
a control device according to claim 8 for controlling the motor of the pulse tool.

10. Computer program comprising instructions which, when the program is executed by a computer, cause the computer to carry out the method as defined in any one of claims 1-7.

11. Computer-readable storage medium comprising instructions which, when executed by a computer, cause the computer to carry out the method as defined in any one of claims 1-7.
